# EUROPEAN PATENT APPLICATION

(11) **EP 2 876 594 A1**
(43) Date of publication of application: **27.05.2015**
(21) Application number: 13820156.1
(22) Date of filing: 18.06.2013
(51) Int. Cl.: G06Q 20/38

(54) **PAYMENT METHOD AND DEVICE**

(30) Priority: 18.07.2012 CN 201210248692
(71) Applicant: ZTE Corporation, Shenzhen, Guangdong 518057 (CN)
(72) Inventor: ZHU, Ye, Shenzhen Guangdong 518057 (CN); CHEN, Xiaoyan, Shenzhen Guangdong 518057 (CN); WEI, Wei, Shenzhen Guangdong 518057 (CN); FENG, Changbao, Shenzhen Guangdong 518057 (CN); QIU, Ting, Shenzhen Guangdong 518057 (CN)
(74) Representative: Gevers Patents
(86) International application number: PCT/CN2013/077426
(87) International publication number: WO 2014/012407

(57) **Abstract**

Disclosed are a payment method and device. With the method, after a payment request is received from a terminal, a two-dimensional code containing payment information of an account corresponding to the two-dimensional code is acquired from the terminal; the payment information of the account in the two-dimensional code is read; and the account is charged using the payment information according to the payment request. With the disclosure, a solution for cumbersome payment for a product in an electronic store in related art is provided, providing a user with a fast and convenient way to pay for a product in an electronic store, and increasing user experience.

## Description

### TECHNICAL FIELD

The disclosure relates to the field of communications, more particularly to a payment method and device.

### BACKGROUND

When purchasing a product in an online electronic store, a user has to pay via a third-party payment account, which is very inconvenient. It is a cumbersome flow to register a third-party payment account and make prepayment particularly for a newbie in electronic store shopping. Some users give up the purchase due to the cumbersome initial payment, resulting in loss of users.

At present, there is no effective solution for cumbersome payment for a product in an electronic store in related art.

### SUMMARY

Embodiments of the disclosure provide a payment method and device, capable of providing a solution for cumbersome payment for a product in an electronic store in related art.

According to one aspect of the disclosure, a payment method is provided, including steps of: after receiving a payment request from a terminal, acquiring, from the terminal, a two-dimensional code containing payment information of an account corresponding to the two-dimensional code; reading the payment information of the account in the two-dimensional code; and charging the account using the payment information according to the payment request.

In an embodiment, the payment information of the account may include: identifier information of the account corresponding to the two-dimensional code and a unique key for making a payment using the account.

In an embodiment, the method may further include a step of: before acquiring, from the terminal, a two-dimensional code, calling a two-dimensional code identifying application in the terminal to identify the two-dimensional code acquired by the terminal.

In an embodiment, the terminal may call the two-dimensional code identifying application in the terminal to identify the acquired two-dimensional code by: when there are multiple two-dimensional code identifying applications in the terminal, selecting one of the multiple two-dimensional code identifying applications according to a preset priority, and calling the selected two-dimensional code identifying application to identify the acquired two-dimensional code.

In an embodiment, the payment request may carry a price of an item to be purchased, and the step of charging the account using the payment information according to the payment request may include a step of: when a balance of the account is greater than or equal to the price of the item to be purchased, deducting an amount equal to the price from the balance of the account and returning payment success information to the terminal; or when a balance of the account is less than the price of the item to be purchased, returning payment failure information to the terminal.

In an embodiment, the two-dimensional code may be a Quick Response code.

According to another aspect of the disclosure, a payment device is provided, including: an acquiring module configured for, after receiving a payment request from a terminal, acquiring, from the terminal, a two-dimensional code containing payment information of an account corresponding to the two-dimensional code; a reading module configured for reading the payment information of the account in the two-dimensional code; and a paying module configured for charging the account using the payment information according to the payment request.

In an embodiment, the device may further include a calling module configured for: calling a two-dimensional code identifying application in the terminal to identify the two-dimensional code acquired by the terminal.

In an embodiment, the calling module may be further configured for: when there are multiple two-dimensional code identifying applications in the terminal, selecting one of the multiple two-dimensional code identifying applications according to a preset priority, and calling the selected two-dimensional code identifying application to identify the acquired two-dimensional code.

In an embodiment, in case that the payment request carries a price of an item to be purchased, the paying module may include a returning module configured for: when a balance of the account is greater than or equal to the price of the item to be purchased, deducting an amount equal to the price from the balance of the account and returning payment success information to the terminal; or when a balance of the account is less than the price of the item to be purchased, returning payment failure information to the terminal.

With the disclosure, after a payment request is received from a terminal, a two-dimensional code containing payment information of an account corresponding to the two-dimensional code is acquired from the terminal; the payment information of the account in the two-dimensional code is read; and the account is charged using the payment information according to the payment request. With the disclosure, a solution for cumbersome payment for a product in an electronic store in related art is provided, providing a user with a fast and convenient way to pay for a product in an electronic store, and improving user experience.

### BRIEF DESCRIPTION OF THE DRAWINGS

Fig.1 is a flowchart of a payment method according to an embodiment of the disclosure;
Fig.2 is a block diagram of a structure of a payment device according to an embodiment of the disclosure;
Fig.3 is a block diagram of a structure of a payment device according to an embodiment of the disclosure; and
Fig.4 is a block diagram of a structure of a paying module according to an embodiment of the disclosure.

### DETAILED DESCRIPTION

The disclosure is elaborated below with reference to drawings and embodiments. Note that embodiments herein and features in the embodiments may be combined with one another as long as there is no conflict.

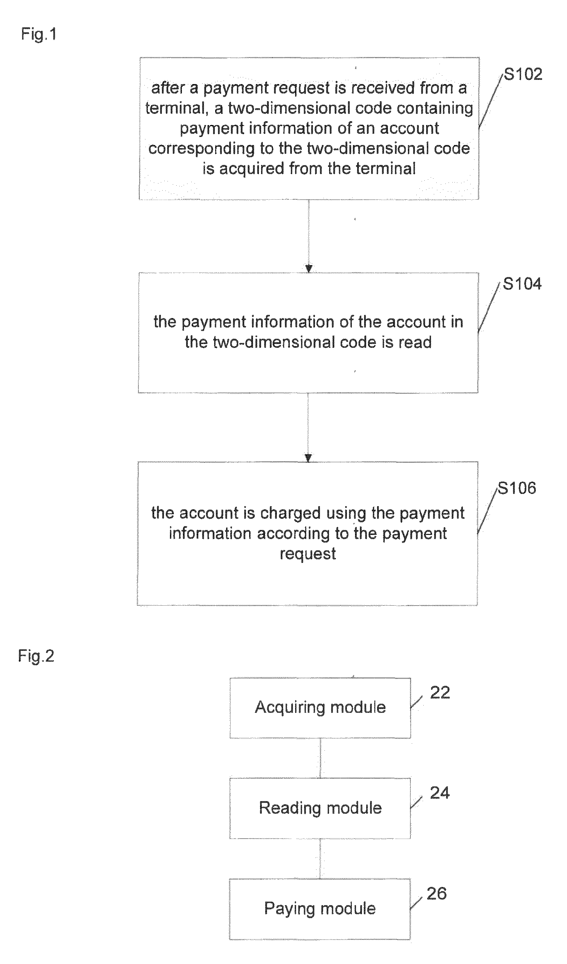

An embodiment of the disclosure provides a payment method. Fig.1 is a flowchart of a payment method according to an embodiment of the disclosure. As shown in Fig.1, the method includes steps as follows.

In Step S102, after a payment request is received from a terminal, a two-dimensional code containing payment information of an account corresponding to the two-dimensional code is acquired from the terminal.

In Step S104, the payment information of the account in the two-dimensional code is read.

In Step S106, the account is charged using the payment information according to the payment request.

Through the steps of the embodiment, a user may pay for an item the user is to purchase according to the payment information, contained in the two-dimensional code, of the account corresponding to the two-dimensional code. In paying for an item in an electronic store, a user only needs to scan the two-dimensional code and send the scanned two-dimensional code, and then the account may be charged according to the payment information of the account contained in the two-dimensional code, without the help of any third-party account or input of any other information during the payment, thereby solving cumbersome payment for a product in an electronic store in related art by providing a user with a fast and convenient way to pay for a product in an electronic store, improving user experience.

In an embodiment, as payment information of an account at present usually consists of a username and a password, the payment information of the account corresponding to the two-dimensional code may be identifier information of the account corresponding to the two-dimensional code and a unique key for making a payment using the account. Of course, the payment information is not limited to such a form.

In an embodiment, in acquiring the two-dimensional code, a two-dimensional code identifying application in the terminal may be called to identify the acquired two-dimensional code. Moreover, if a user is to pay for an item using a two-dimensional code for the first time, the user may call a two-dimensional code identifying application in the terminal by downloading a plug-in from a webpage.

In an embodiment, when there are multiple two-dimensional code identifying applications in the terminal, a priority for using each of the multiple two-dimensional code identifying applications may be preset, such that one of the multiple two-dimensional code identifying applications may be selected according to the preset priority, and the selected two-dimensional code identifying application may be called to identify the acquired two-dimensional code, thereby avoiding a conflict among the applications and improving system stability.

In an embodiment, when the price of the item to be purchased contained in the payment request is less than or equal to the balance of the account corresponding to the two-dimensional code, an amount equal to the price may be deducted directly from the balance of the account and the payment success information may be returned to the terminal; or when the price of the item to be purchased contained in the payment request is greater than the balance of the account corresponding to the two-dimensional code, the payment cannot be made, in which case the payment failure information may be returned to the terminal, such that the user may make the payment by some other ways, or deposit a prepayment in the account corresponding to the two-dimensional code.

In an embodiment, the two-dimensional code may be a Quick Response (QR) code, which is easy to use and can be read quickly.

In accordance with the payment method, an embodiment of the disclosure further provides a payment device configured for implementing an aforementioned embodiment. What have been described are not repeated. As is used below, the term "module" may implement a combination of software and/or hardware of predetermined functions. Although a device according to a following embodiment may be implemented by software, implementation of hardware or of a combination of software and hardware may also be conceived.

Fig.2 is a block diagram of a structure of a payment device according to an embodiment of the disclosure. As shown in Fig.2, the device includes: an acquiring module 22, a reading module 24 and a paying module, which are elaborated below as follows.

The acquiring module 22 is configured for: after receiving a payment request from a terminal, acquiring, from the terminal, a two-dimensional code containing payment information of an account corresponding to the two-dimensional code. The reading module 24 is connected to the acquiring module 22 and is configured for: reading the payment information of the account contained in the two-dimensional code acquired by the acquiring module 22. The paying module 26 is connected to the reading module 24 and is configured for: charging the account using the payment information read by the reading module 24 according to the payment request.

With the modules according to the embodiment, in paying for an item in an electronic store, a user only needs to scan the two-dimensional code and send the scanned 2D code, and then the account may be charged according to the payment information of the account contained in the two-dimensional code, without the help of any third-party account or input of any other information during the payment, thereby solving cumbersome payment for a product in an electronic store in related art by providing a user with a fast and convenient way to pay for a product in an electronic store.

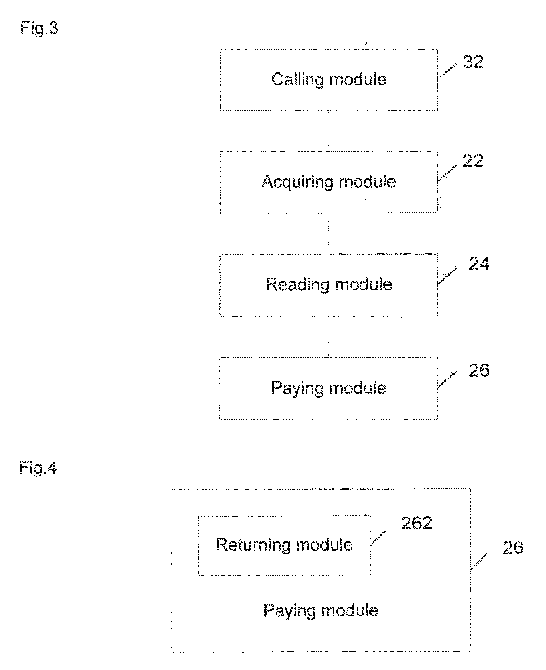

Fig.3 is a block diagram of a structure of a payment device according to an embodiment of the disclosure. As shown in Fig.3, the device may further include a calling module 32, connected to the acquiring module 22 and configured for calling a two-dimensional code identifying application in a terminal to identify an acquired two-dimensional code.

In an embodiment, the calling module 32 may be further configured for: when there are multiple two-dimensional code identifying applications in the terminal, selecting one of the multiple two-dimensional code identifying applications according to a preset priority, and calling the selected two-dimensional code identifying application to identify the acquired two-dimensional code.

Fig.4 is a block diagram of a structure of a paying module 26 according to an embodiment of the disclosure. As shown in Fig.4, in case that the payment request carries a price of an item to be purchased, the paying module 26 may include a returning module 262 configured for: when a balance of the account is greater than or equal to the price of the item to be purchased, deducting an amount equal to the price from the balance of the account and returning payment success information to the terminal; or when a balance of the account is less than the price of the item to be purchased, returning payment failure information to the terminal.

The embodiment not only simplifies payment in purchasing an item in an online store, but also provides an operator with a new way of publicity and promotion.

Description is made below with reference to an embodiment, which combines the aforementioned embodiments.

At present, payment at an online mobile phone application store, such as the wostore, Mobile mm, Tianyi space and appstore, is made generally by registering a third-party account and binding the third-party account with a UnionPay card or a credit card, or by deduction from prepaid call fees of a mobile phone.

The embodiment provides, with an example of purchasing a paid application in an application store, a method for making a payment in an application store using a QR code. In the embodiment, an operator sells or gives a QR code containing a certain amount of money and a unique key to a user in advance. After downloading a paid item from an application store, the user makes a payment by scanning the QR code using a camera on a mobile phone or a computer.

During payment by a QR code in existing art, the QR code is merely used as a verification code, and the payment has to be associated with a third-party bank account to increase security in electronic payment. The payment method in the embodiment may simplify a payment flow of buying a paid item in a smart phone application store.

A conventional non-smart phone is gradually out of the market, and a smart phone is a trend of current development. The most important feature of a smart phone is that various applications may be installed according to the preference of a user, and a mobile phone application store is being gradually accepted by more and more users, and has become a battleground for telecom operators. However, in purchasing a paid item in an application store, payment has to be made via a third-party payment account. For a user new in paid application purchase, registering a third-party account, associating the third-party account to an account at an application store, and making a prepayment are cumbersome intimidating operations for some users. The embodiment simplifies the payment flow, such that a user may successfully finish the purchase flow even it is the first time for the user to make such a payment.

A flow of paying for an item in an online application store using the payment scheme according to the embodiment is as follows.

In Step S2, a user selects an item to be purchased on a webpage, and clicks on 'Purchase'.

In Step S4, the webpage receives a transaction request clicked on by the user and sends the transaction request to a server.

In Step S6, the server acquires the amount to be paid for purchasing the item according to this request and sends the amount to the webpage.

In Step S8, the webpage shows the amount to the user and inquires the user about a way of payment.

In Step S10, if the user chooses to pay by a QR code, it is determined whether it is the first time that the user pays by a QR code; if it is the first time, the flow goes to Step S12; otherwise if it is not the first time, the flow goes to Step S14.

In Step S12, a payment plug-in required for paying by a QR code pops out on the webpage, and the user installs the payment plug-in.

In Step S14, the user scans the QR code; after acquiring the QR code, a terminal of the user calls, via the payment plug-in installed, a QR code identifying application in the terminal to identify the QR code; the QR code contains encrypted user information; an algorithm for encrypting the user information and a calculation for decrypting the user information may be provided by a billing party or by a third party.

In Step S16, the user sends identified QR code information to the webpage.

In Step S18, the webpage sends information such as the QR code information containing encrypted information and the price of the item to a billing party or a third party providing the decryption calculation.

In Step S20, if the information is sent to the billing party, the billing party decrypts the QR code information and acquires payment information of the account corresponding to the QR code. If the information is sent to the third party, the third part decrypts the QR code information and sends the decrypted information to the billing party.

In Step S22, the billing party determines whether the balance of the account is no less than the amount to be paid for the item; if the balance of the account is no less than the amount to be paid, the payment is made using the payment information and the payment success information is returned to the webpage; otherwise if the balance of the account is less than the amount to be paid, the payment failure information is returned to the webpage. Meanwhile, other account information, such as the expiry date and the balance, may also be returned to the webpage.

In Step S24, the webpage shows what returned by the billing party to the user.

Another embodiment further provides a software configured for executing a technical solution described in an aforementioned embodiment.

Another embodiment further provides a storage medium storing the software. The storage medium includes but is not limited to a compact disk, a floppy disk, a hard disk, an erasable memory and the like.

It is clear that those skilled in the art will understand that the modules or steps of the disclosure may be implemented by a general computing device, and may be located in a single computing device or distributed in a network consisting of computing devices. Optionally, the modules or steps may be implemented by program codes executable by the computing device(s), so as to be stored in a storage device and executed by a computing device. In some cases, the steps may be executed in a sequence different from a sequence illustrated or described herein. Alternatively, the steps may be made into integrated circuit modules respectively. Alternatively, modules or steps of the modules and the steps may be implemented as a single integrated circuit module. By doing so, the disclosure is not limited to any specific combination of hardware and software.

What described are only embodiments of the disclosure and are not intended to limit the disclosure. For those skilled in the art, various modifications and changes may be made to the disclosure. Any modifications, equivalent replacements, improvements and the like made within the spirit and principle of the disclosure shall fall within the scope of protection of the disclosure.

## Claims

1. A payment method, comprising steps of:
after receiving a payment request from a terminal, acquiring, from the terminal, a two-dimensional code containing payment information of an account corresponding to the two-dimensional code;
reading the payment information of the account in the two-dimensional code; and
charging the account using the payment information according to the payment request.

2. The method according to claim 1, wherein the payment information of the account comprises:
identifier information of the account corresponding to the two-dimensional code and a unique key for making a payment using the account.

3. The method according to claim 1, further comprising a step of: before acquiring, from the terminal, a two-dimensional code,
calling a two-dimensional code identifying application in the terminal to identify the two-dimensional code acquired by the terminal.

4. The method according to claim 3, wherein the terminal calls the two-dimensional code identifying application in the terminal to identify the acquired two-dimensional code by:
when there are multiple two-dimensional code identifying applications in the terminal, selecting one of the multiple two-dimensional code identifying applications according to a preset priority, and calling the selected two-dimensional code identifying application to identify the acquired two-dimensional code.

5. The method according to any one of claims 1 to 4, wherein the payment request carries a price of an item to be purchased, and the step of charging the account using the payment information according to the payment request comprises a step of:
when a balance of the account is greater than or equal to the price of the item to be purchased, deducting an amount equal to the price from the balance of the account and returning payment success information to the terminal; or
when a balance of the account is less than the price of the item to be purchased, returning payment failure information to the terminal.

6. The method according to any one of claims 1 to 4, wherein the two-dimensional code is a Quick Response code.

7. A payment device, comprising:
an acquiring module configured for: after receiving a payment request from a terminal, acquiring, from the terminal, a two-dimensional code containing payment information of an account corresponding to the two-dimensional code;
a reading module configured for: reading the payment information of the account in the two-dimensional code; and
a paying module configured for: charging the account using the payment information according to the payment request.

8. The device according to claim 7, further comprising:
a calling module configured for: calling a two-dimensional code identifying application in the terminal to identify the two-dimensional code acquired by the terminal.

9. The device according to claim 8, wherein the calling module is further configured for: when there are multiple two-dimensional code identifying applications in the terminal, selecting one of the multiple two-dimensional code identifying applications according to a preset priority, and calling the selected two-dimensional code identifying application to identify the acquired two-dimensional code.

10. The device according to any of claims 7 to 9, wherein in case that the payment request carries a price of an item to be purchased, the paying module comprises:
a returning module configured for: when a balance of the account is greater than or equal to the price of the item to be purchased, deducting an amount equal to the price from the balance of the account and returning payment success information to the terminal; or when a balance of the account is less than the price of the item to be purchased, returning payment failure information to the terminal.
